Europäisches Patentamt

(19) European Patent Office

Office européen des brevets

(11) Numéro de publication: **0 087 342**
**B1**

(12) # FASCICULE DE BREVET EUROPEEN

(45) Date de publication du fascicule du brevet:
**10.04.85**

(21) Numéro de dépôt: **83400252.9**

(22) Date de dépôt: **07.02.83**

(51) Int. Cl.⁴: **B 23 K 37/04**

(54) Dispositif d'alignement pour l'accostage et le soudage bord à bord de tôles.

(30) Priorité: **19.02.82 FR 8202733**

(43) Date de publication de la demande:
**31.08.83 Bulletin 83/35**

(45) Mention de la délivrance du brevet:
**10.04.85 Bulletin 85/15**

(84) Etats contractants désignés:
**BE DE FR GB IT LU NL**

(56) Documents cités:
**BE - A - 550 449**
**DE - A - 2 326 990**
**FR - A - 2 391 022**
**US - A - 3 198 931**
**US - A - 3 286 342**
**US - A - 3 378 185**

(73) Titulaire: **LA SOUDURE AUTOGENE FRANCAISE,**
**75, Quai d'Orsay, F-75007 Paris (FR)**

(72) Inventeur: **Bernou, Joseph, 6, avenue Albert Camus,**
**F-79200 Parthenay (FR)**
Inventeur: **Sguazzi, Georges, 7, place du Maréchal Foch,**
**F-95880 Enghien-les-Bains (FR)**

(74) Mandataire: **Liboz, André et al, L'AIR LIQUIDE SOCIETE**
**ANONYME POUR L'ETUDE ET L'EXPLOITATION DES**
**PROCEDES GEORGES CLAUDE 75, Quai d'Orsay,**
**F-75321 Paris Cédex 07 (FR)**

## Description

La présente invention concerne essentiellement un dispositif d'alignement de la rive d'une pièce en forme de feuille ou de plaque de faible épaisseur, par exemple la rive d'une tôle d'acier plane ou envirolée, en vue de son accostage puis de son soudage bord à bord avec une autre pièce ou avec elle-même sur un banc de soudage longitudinal muni d'une poutre-support de pièces, du type comportant des organes de positionnement disposés sur une ligne le long de laquelle doivent s'effectuer l'accostage des rives desdites pièces puis leur soudage.

Un tel dispositif est utilisé pour aligner la rive d'une tôle ou envirolée par exemple suivant l'axe de déplacement longitudinal d'une torche de soudage sur un banc d'assemblage longitudinal en vue de son accostage par la rive de l'autre tôle ou par sa seconde rive dans le cas d'un envirolage, cela pour réaliser un soudage bord à bord sans pointage desdites rives.

Des dispositifs de ce type actuellement connus, par exemple par le brevet français N° 2391022, présentent un encombrement important et sont d'une construction compliquée.

La présente invention a pour but d'éviter ces inconvénients et propose, à cet effet, un dispositif dans lequel chaque organe de positionnement précité comporte un doigt mobile en translation verticale et en rotation autour d'un axe vertical et un organe de commande de son positionnement linéaire et angulaire, ledit doigt étant prévu pour occuper une position active pour laquelle il est en contact avec la rive de l'une des pièces précitées et une position effacée pour laquelle il permet l'accostage de la rive de la seconde pièce.

Cette configuration des organes de positionnement permet de réaliser un dispositif d'alignement d'encombrement réduit et de construction extrêmement simple. Il est évident que, pour matérialiser la ligne de joint, il est nécessaire de prévoir au moins deux organes de positionnement, l'écartement entre ces organes étant fonction de la largeur des tôles à assembler.

Selon une autre caractéristique de l'invention, le doigt est monté sur la poutre-support précitée et est mobile en translation verticale et en rotation autour d'un axe vertical.

Cette disposition correspond aux meilleures conditions d'alignement des tôles qui, sur les bancs de soudage habituels, sont disposées horizontalement.

Selon encore une autre caractéristique de l'invention, l'organe de commande est monté également sur la poutre-support et comporte une came mobile en translation horizontale coopérant avec le doigt précité.

D'autres caractéristiques et avantages de l'invention apparaîtront au cours de la description qui va suivre.

Dans les dessins annexés donnés uniquement à titre d'exemple non limitatif:

la fig. 1 est une vue partielle, en coupe selon la ligne I-I de la fig. 3, d'un banc de soudage muni d'un dispositif d'alignement selon l'invention;

la fig. 2 est une vue selon la ligne II-II de la fig. 1 ;

la fig. 3 est une vue en coupe selon la ligne III-III de la fig. 1 montrant l'organe de positionnement du dispositif d'alignement en position effacée avant la mise en place de la première tôle;

la fig. 4 est une vue identique à la fig. 3, mais l'organe de positionnement étant en position active;

la fig. 5 est une vue identique à la fig. 3, mais l'organe de positionnement étant à nouveau en position effacée après accostage de la seconde tôle.

On a représenté sur les dessins un banc de soudage longitudinal pour tôles planes désigné d'une façon générale par la référence 1 et muni d'un dispositif d'alignement selon l'invention comportant deux organes de positionnement identiques désignés d'une façon générale par la référence 2.

Le banc 1, connu en soi, comporte un bâti 10 supportant une poutre 11 ayant une section en I et sur laquelle est montée une latte 12 sur laquelle viennent en appui les deux rives des tôles à souder, cette latte présentant une encoche 12a qui sert de logement pour la partie inférieure du cordon de soudure et qui matérialise, par conséquent, la ligne le long de laquelle doivent s'effectuer l'accostage puis le soudage des rives $R_1$ et $R_2$ des tôles $T_1$ et $T_2$. Le banc 1 comporte encore deux jeux de rouleaux 13a et 13b disposés de part et d'autre de la latte 12 et destinés à supporter les tôles $T_1$ et $T_2$, ainsi que des organes de serrage représentés schématiquement en 14a et 14b. Le banc 1 comporte enfin une torche de soudage (non représentée) disposée au-dessus de la latte 12 qui se déplace longitudinalement selon l'encoche 12a.

Les organes de positionnement 2, montés sur la poutre 11, comportent chacun un doigt 20 monté sur l'aile horizontale supérieure 11a de ladite poutre et un organe de commande 30 dudit doigt 20 monté sur son aile inférieure 11b.

Le doigt 20, formé d'une tige verticale 21 qui traverse l'aile 11a et muni, à sa partie supérieure, d'une butée horizontale 22, est mobile en translation verticale et en rotation autour d'un axe également vertical. Le doigt 20 comporte, à sa partie inférieure, deux galets 23 et 24 d'axes respectivement horizontal et vertical prévus pour coopérer avec l'organe de commande 30 précité. Un ressort de rappel 25 tend à le rappeler en position basse.

Les organes qui commandent le positionnement vertical et angulaire des doigts 20 sont constitués chacun par une came 30 mobile en translation horizontale et pouvant être entraînée selon l'une des flèches F ou F' par un même organe d'entraînement, par exemple un vérin (non représenté), actionné manuellement ou motorisé. La came 30 comporte un plan incliné 31 sur lequel vient en appui, maintenu par le ressort 25, le galet 23 du doigt 20 et une rainure 32 formée de deux branches 32a et 32b décalées angulairement de 90° et dans laquelle est engagé le galet 24 précité. On prévoit un seul vérin pour l'entraînement des deux cames de façon à assurer le fonctionnement en synchronisme des deux organes de positionnement.

Le dispositif d'alignement selon l'invention est utilisé de la façon suivante:

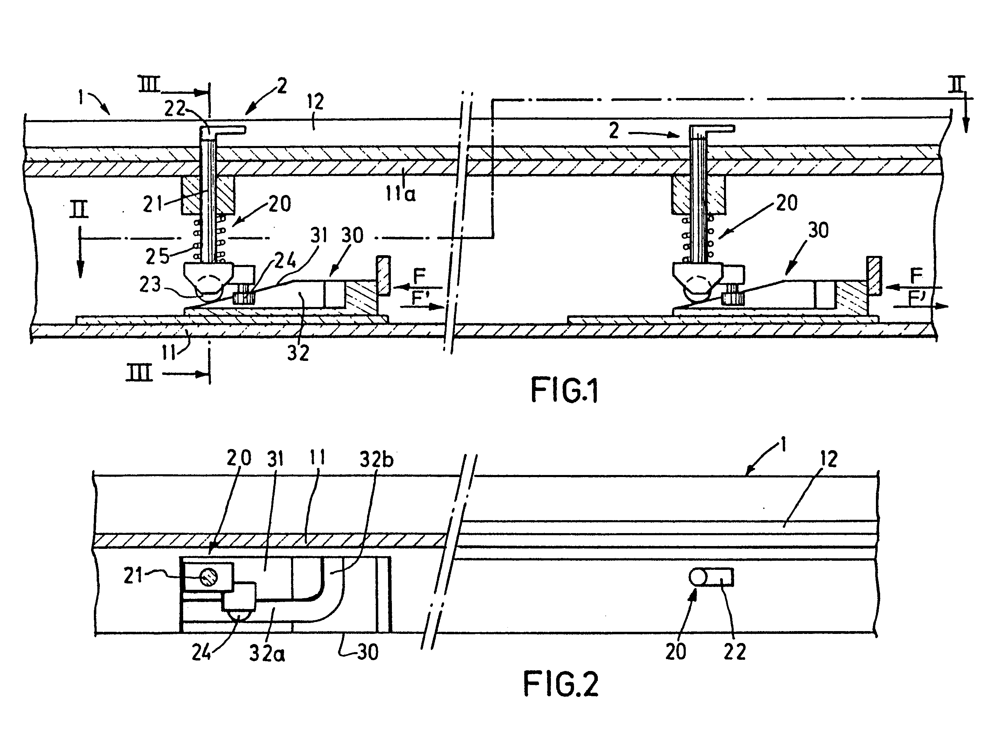

le doigt 20 et la came 30 occupant la position représentée aux fig. 1 à 3, on actionne le vérin de façon qu'il entraîne ladite came vers la gauche selon la flèche F; le doigt 20 se soulève alors puis, lorsqu'il atteint son point maximal de soulèvement, effectue une rotation de 90° qui amène la butée 22 au-dessus de la latte 12, les extrémités libres de deux butées 22 matérialisant la ligne de joint entre les deux tôles;

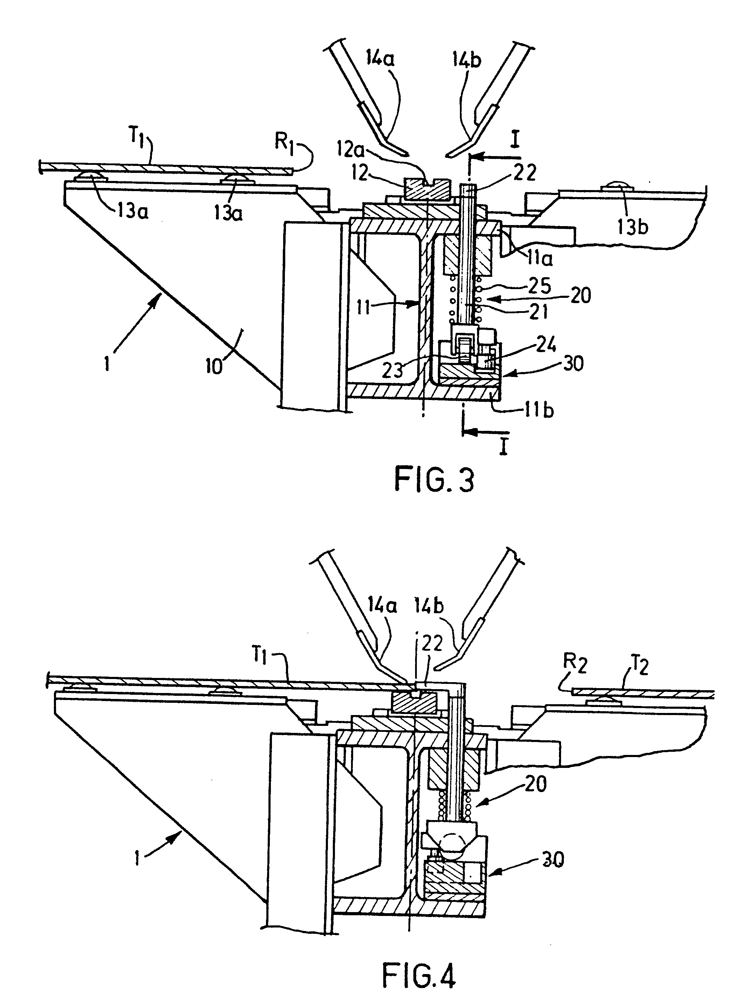

on amène la rive $R_1$ de la tôle $T_1$ supportée par les rouleaux 13a au contact des butées 22, on actionne les moyens de serrage 14a de façon à maintenir en place la tôle $T_1$ (voir la fig. 4);

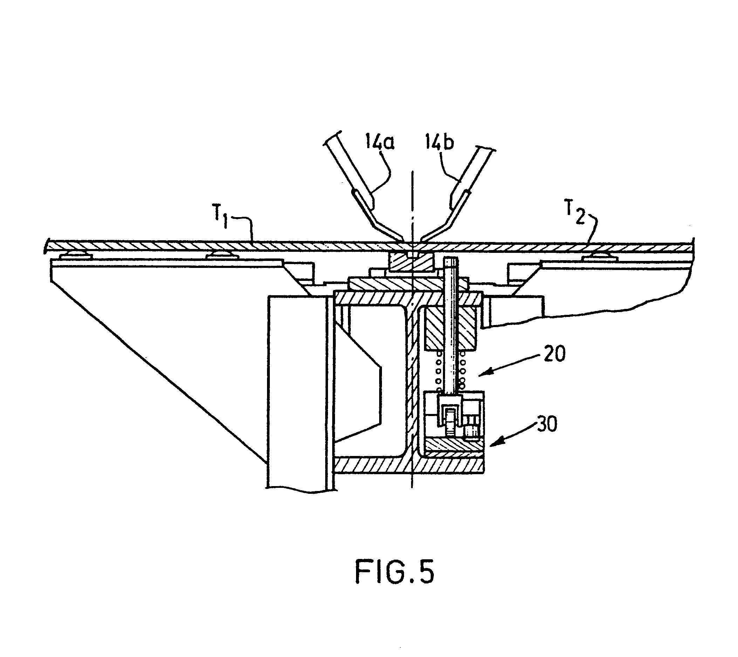

on actionne le vérin de façon qu'il entraîne la came 30 vers la droite selon la flèche F', le doigt 21 effectue alors une rotation de 90°, puis s'abaisse jusqu'à prendre la position escamotée représentée à la fig. 5;

on amène alors la rive $R_2$ de la tôle $T_2$ supportée par les rouleaux 13b au contact de la rive $R_1$ de la tôle $T_1$ et on actionne les moyens de serrage 14b de façon à maintenir en place la tôle $T_2$;

les deux rives ainsi accolées et maintenues, on peut effectuer soudage bord à bord sans pointage.

On peut apporter au mode de réalisation décrit et représenté de nombreuses variantes sans pour autant sortir du cadre de l'invention. C'est ainsi, par exemple, que l'on pourrait monter les organes de positionnement sur des bancs de soudage longitudinal prévus pour l'envirolage et que l'on pourrait prévoir, au lieu d'une commande mécanique telle que la came 30, une commande pneumatique ou électromagnétique. De plus, le dispositif de l'invention n'est nullement limité à l'accostage à bords jointifs des tôles, mais pourrait être utilisé pour l'assemblage de tôles laissant subsister entre les deux bords un étroit interstice qui est rempli ultérieurement par le cordon de soudure.

représentée aux fig. 1 à 3, on actionne le vérin de façon qu'il entraîne ladite came vers la gauche selon la flèche F; le doigt 20 se soulève alors puis, lorsqu'il atteint son point maximal de soulèvement, effectue une rotation de 90° qui amène la butée 22 au-dessus de la latte 12, les extrémités libres de deux butées 22 matérialisant la ligne de joint entre les deux tôles;

on amène la rive $R_1$ de la tôle $T_1$ supportée par les rouleaux 13a au contact des butées 22, on actionne les moyens de serrage 14a de façon à maintenir en place la tôle $T_1$ (voir la fig. 4);

on actionne le vérin de façon qu'il entraîne la came 30 vers la droite selon la flèche F', le doigt 21 effectue alors une rotation de 90°, puis s'abaisse jusqu'à prendre la position escamotée représentée à la fig. 5;

on amène alors la rive $R_2$ de la tôle $T_2$ supportée par les rouleaux 13b au contact de la rive $R_1$ de la

tôle $T_1$ et on actionne les moyens de serrage 14b de façon à maintenir en place la tôle $T_2$;

les deux rives ainsi accolées et maintenues, on peut effectuer soudage bord à bord sans pointage.

On peut apporter au mode de réalisation décrit et représenté de nombreuses variantes sans pour autant sortir du cadre de l'invention. C'est ainsi, par exemple, que l'on pourrait monter les organes de positionnement sur des bancs de soudage longitudinal prévus pour l'envirolage et que l'on pourrait prévoir, au lieu d'une commande mécanique telle que la came 30, une commande pneumatique ou électromagnétique. De plus, le dispositif de l'invention n'est nullement limité à l'accostage à bords jointifs des tôles, mais pourrait être utilisé pour l'assemblage de tôles laissant subsister entre les deux bords un étroit interstice qui est rempli ultérieurement par le cordon de soudure.

## Revendications

1. Dispositif d'alignement de la rive d'une pièce en forme de feuille ou de plaque de faible épaisseur, par exemple la rive d'une tôle d'acier plane ou envirolée, en vue de son assemblage bord à bord avec une autre pièce ou avec elle-même sur un banc (11) de soudage longitudinal muni d'une poutre-support (1) de pièces, du type comportant des organes de positionnement disposés sur une ligne le long de laquelle doivent s'effectuer l'accostage desdites pièces puis leur soudage, ledit dispositif étant caractérisé en ce que chaque organe de positionnement précité comporte un doigt (20) mobile en translation verticale et en rotation autour d'un axe vertical et un organe de commande (30) de son positionnement linéaire et angulaire, ledit doigt (20) étant prévu pour occuper une position active pour laquelle il est en contact avec la rive ($R_1$) de l'une ($T_1$), des pièces précitées et une position effacée pour laquelle il permet l'accostage de la rive ($R_2$) de la seconde pièce ($T_2$).

2. Dispositif selon la revendication 1, caractérisé en ce que le doigt (20) est monté sur la poutre-support précitée.

3. Dispositif selon la revendication 2, caractérisé en ce que l'organe de commande (30) est monté également sur la poutre-support précitée et comporte une came mobile en translation horizontale coopérant avec des galets (23 et 24) solidaires du doigt (20) précité.

4. Dispositif selon la revendication 3, caractérisé en ce que la came (30) précitée comporte un plan incliné (31) qui commande la position verticale du doigt (20) par l'intermédiaire du premier galet précité (23) et une rainure (32) formée de deux branches (32a et 32b) angulairement décalées de 90° et dans laquelle est engagé le second galet précité (24).

5. Dispositif selon la revendication 4, caractérisé en ce que le premier galet précité (23) est maintenu en appui sur le plan incliné (31) par l'intermédiaire d'un ressort de rappel (25) agissant sur ledit doigt.

6. Dispositif selon la revendication 2, caractérisé en ce que le doigt (20) précité présente la forme générale d'un L, étant formé d'un doigt vertical (21) muni, à sa partie supérieure, d'une butée (22) contre laquelle vient en appui la rive (R₁) précitée.

7. Dispositif selon la revendication 6, caractérisé en ce qu'il comporte deux organes de positionnement dont les butées précitées définissent, en position active, la ligne d'accostage des pièces.

8. Dispositif selon la revendication 3, caractérisé en ce que les organes de commande (30) précités des divers organes de positionnement (2) sont entraînés par un seul vérin.


**Patentansprüche**

1. Vorrichtung zum Ausrichten der Kante eines Werkstückes in Form einer Folie oder einer Platte geringer Dicke, beispielsweise der Kante eines ebenen oder gerundeten Stahlbleches, zum Anordnen des Randes an einem Rand eines anderen Werkstückes oder dem eigenen Rand auf einer länglichen Schweissbank (1), die mit einer Trägerstütze (11) für Werkstücke ausgestattet ist, mit Einstellorganen, die auf einer Linie angeordnet sind, längs der das Aneinanderfügen der Werkstücke und dann ihr Verschweissen erfolgen soll, dadurch gekennzeichnet, dass jedes Einstellorgan einen in vertikaler Verschiebung und zur Drehung um eine vertikale Achse bewegbaren Finger (20) und ein Steuerorgan (30) für seine Einstellung auf der Linie und im Winkel aufweist, wobei der Finger (20) vorgesehen ist, um eine aktive Position einzunehmen, in welcher er mit der Kante (R₁) des einen (T₁) der genannten Werkstücke in Berührung ist, sowie eine Null-Position, welche das Aneinanderfügen der Kante (R₂) des zweiten Werkstückes (T₂) erlaubt.

2. Vorrichtung nach Anspruch 1, dadurch gekennzeichnet, dass der Finger (20) auf der Trägerstütze montiert ist.

3. Vorrichtung nach Anspruch 2, dadurch gekennzeichnet, dass das Steuerorgan (30) ebenfalls auf der genannten Trägerstütze montiert ist und einen in horizontaler Verschiebung beweglichen Nocken aufweist, der mit Rollen (23) und (24) zusammenwirkt, die formschlüssig mit dem genannten Finger (20) verbunden sind.

4. Vorrichtung nach Anspruch 3, dadurch gekennzeichnet, dass der Nocken (30) eine geneigte Ebene (31) aufweist, welche die vertikale Position des Fingers (20) mittels der ersten Rolle (23) steuert, sowie eine Rille (32) aufweist, die von zwei um 90° im Winkel versetzten Schenkeln (32a und 32b) gebildet ist und in welcher sich die zweite Rolle (24) in Eingriff befindet.

5. Vorrichtung nach Anspruch 4, dadurch gekennzeichnet, dass die genannte erste Rolle (23) auf der geneigten Ebene (31) mittels einer Rückholfeder (25) abgestützt gehalten ist, die auf den Finger wirkt.

6. Vorrichtung nach Anspruch 2, dadurch gekennzeichnet, dass der Finger (20) im allgemeinen die Form eines L hat, welches aus einem vertikalen Finger (21) gebildet ist, der an seinem oberen Ende mit einem Widerlager (22) ausgestattet ist, gegen welches sich die Kante (R₁) abstützt.

7. Vorrichtung nach Anspruch 6, dadurch gekennzeichnet, dass sie zwei Einstellorgane aufweist, deren Widerlager in aktiver Position die Aneinanderfügungslinie der Werkstücke definieren.

8. Vorrichtung nach Anspruch 3, dadurch gekennzeichnet, dass die Steuerorgane (30) der verschiedenen Einstellorgane (2) durch eine einzige Winde angetrieben sind.


**Claims**

1. Device for alignment of the edge of a work-piece in form of a foil or a plate having small thickness, for example the edge of a plane or rounded metal plate, with respect to the assembly rim to rim with another workpiece or with itself on a longitudinal welding bench (1) equipped with a beam support (11) for workpieces, of the type comprising positioning elements disposed on a line along which the accosting of the said workpieces and then the welding thereof shall be made, the device being characterized in that each positioning element comprises a finger (20) movable in vertical displacement and rotatable around a vertical axis and a control element (30) of its linear and angular positioning, the said finger (20) being provided to occupy an active position for which it is in contact with the edge (R₁) of the one (T₁) of the said workpieces and a neutral position for which it permits the accosting of the edge (R₂) of the second workpiece (T₂).

2. Device according to Claim 1, characterized in that the finger (20) is mounted on the said beam support.

3. Device according to Claim 2, characterized in that the control element (30) is also mounted on the beam support and comprises a cam movable in horizontal displacement cooperating with rollers (23 and 24) form-closed with the aforementioned finger (20).

4. Device according to Claim 3, characterized in that the said cam (30) comprises an inclined plane (31) which controlls the vertical position of the finger (20) by means of the first roller (23) and the groove (32) formed by two branches (32a and 32b) angularly displaced by 90° and in which the second roller (24) is engaged.

5. Device according to Claim 4, characterized in that the first roller (23) is maintained supported on the inclined plane (31) by means of a return spring (25) acting on the said finger.

6. Device according to Claim 2, characterized in that the said finger (20) generally has the form of an L, being formed by a vertical finger (21) equipped at the upper part with a counterbearing (22), by which the said edge ($R_1$) is supported.

7. Device according to Claim 6, characterized in that it comprises two positioning elements, the counterbearings of which define the line of accosting of the workpieces in the active position.

8. Device according to Claim 3, characterized in that the said control elements (30) of different positioning elements (2) are driven by a single jack.

FIG.1

FIG.2

FIG.3

FIG.4

FIG.5